# EUROPEAN PATENT APPLICATION

(11) **EP 4 552 493 A2**
(43) Date of publication of application: **14.05.2025**
(21) Application number: 24193062.7
(22) Date of filing: 06.08.2024
(51) Int. Cl.: A01M 1/20, A01G 24/00

(54) **ANTI-INSECT CULTURE MEDIUM AND ANTI-INSECT METHOD USING THE SAME**

(30) Priority: 24.08.2023 TW 112131793; 02.02.2024 TW 113104227
(71) Applicant: Royal Base Corporation, Taipei City (TW)
(72) Inventor: WANG, Hao-Ping, TAIPEI CITY (TW)
(74) Representative: van Dam, Vincent

(57) **Abstract**

The present invention provides an anti-insect culture medium, comprising a shaped medium (1) having a plurality of pores (10) interconnected to each other, and an anti-insect agent (20) evenly dispersed and fixed in the pores (10); wherein the shaped medium (1) comprises at least one culture medium solid (30), the anti-insect agent (20) comprises an anti-insect ingredient, and the anti-insect agent (20) is a sustained-release formulation. The anti-insect culture medium of the present invention can provide a long-term and complete anti-insect efficacy to plant roots. The present invention further provides an anti-insect method, which reduces the amount of anti-insect agents (20) and avoids the inconvenience of regular application.

## Description

The present invention relates to an anti-insect culture medium. The present invention further relates to an anti-insect method.

The book *Taiwan's Wild Orchids* recites that "there are more than 400 kinds of orchids, which accounts for one tenth of the 4,600 or more kinds of plants in Taiwan." Accordingly, Taiwan has great orchid diversity. Further, Taiwanese total flower exports in 2022 reached $224 million US dollars, of which Phalaenopsis spp. and Oncidium flexuosum account for 77.5% of the total exports. Therefore, orchids are important cash crops in Taiwan.

Geographically, the hot and humid climate of Taiwan is suitable for the growth of orchids, and so for the growth and reproduction of various insects. That is, the insect infestation during orchid cultivation process will result in tremendous economic losses because of (1) reduced quality and value of orchid goods, (2) escalated quarantine measures adopted by import countries, and (3) direct container return including all containerized orchid goods; therefore, insect removal is an important task in orchid cultivation.

Current anti-insect method comprises (1) use of 16-mesh or 32-mesh anti-insect nets, (2) use of anti-climbing devices against mollusks on plant supports, (3) regular replacement of sticky traps for insects, and (4) regular spraying of anti-insect agents, which requires tremendous manpower. Therefore, a more efficient anti-insect measure remains to be developed.

To solve the aforementioned problems, the present invention provides an anti-insect culture medium, comprising: a shaped medium having a plurality of pores interconnected to each other, and an anti-insect agent evenly dispersed and fixed in the pores; wherein the shaped medium comprises at least one culture medium solid, the anti-insect agent comprises an anti-insect ingredient, and the anti-insect agent is a sustained-release formulation.

The shaped medium of the present invention is convenient for implanting and supporting plant seedlings, such as orchid seedlings, to facilitate seedling growth, and it has pores to accommodate and fix the uniformly dispersed anti-insect agents. Further, the sustained-releasing of the anti-insect ingredients provides anti-insect protection for the roots embedded in the anti-insect culture medium during seedling growth, thereby avoiding the traditional lack of protection problem inside the culture medium which results from the mere application of anti-insect agent on the surface of a culture medium. Finally, the present invention proves that the anti-insect culture medium of the present invention (1) provides a long-term and complete anti-insect efficacy to plant roots, (2) eliminates labor cost for regular re-application of anti-insect agents, and (3) reduces the amount of anti-insect agents. Therefore, the present invention reduces plant cultivation cost and is more friendly to both the natural environment and the health of cultivators.

According to the present invention, the pores of the shaped medium also indicates voids or pore spaces.

According to the present invention, "anti-insect" indicates "killing insects," "inhibiting insect growth," "inhibiting insect reproduction," "repelling insects" or "insect-proof," but not limited thereto.

According to the present invention, "evenly dispersed" indicates that the anti-insect agent weight percentages in the samples derived from different parts of the anti-insect culture medium are similar or the same.

In one embodiment, based on a total weight of the anti-insect agent, the anti-insect ingredient is in an amount of 0.1 weight percent to 15 weight percent, for example, 0.1 weight percent, 0.3 weight percent, 0.6 weight percent, 0.9 weight percent, 1.2 weight percent, 1.5 weight percent, 2 weight percent, 4 weight percent, 6 weight percent, 8 weight percent, 10 weight percent, 12 weight percent, 14 weight percent or 15 weight percent.

In one embodiment, the anti-insect agent comprises a solid formulation, a liquid formulation or a combination thereof.

Preferably, the solid formulation comprises a solid bait, and the solid bait is in a form of powder, but not limited thereto.

Preferably, the liquid formulation comprises any of an emulsion, a water-based emulsion and a water suspension or a combination thereof, but not limited thereto.

In one embodiment, the anti-insect agent is a plurality of anti-insect particles. Preferably, based on a total weight of the anti-insect culture medium, the shaped medium is in an amount of 85 weight percent to 99.99 weight percent, for example, 85 weight percent, 87 weight percent, 90 weight percent, 93 weight percent, 97 weight percent, 99 weight percent, 99.3 weight percent, 99.7 weight percent, 99.9 weight percent, 99.95 weight percent or 99.99 weight percent; and the anti-insect particles are in an amount of 0.01 weight percent to 15 weight percent, for example, 0.01 weight percent, 0.05 weight percent, 0.1 weight percent, 0.3 weight percent, 0.7 weight percent, 1 weight percent, 3 weight percent, 7 weight percent, 10 weight percent, 13 weight percent or 15 weight percent.

In one embodiment, the anti-insect agent is a water-based emulsion, and based on a total weight of 10 g of the anti-insect culture medium, the water-based emulsion is in a volume of 0.01 ml to 2 ml, for example, 0.01 ml, 0.03 ml, 0.07 ml, 0.1 ml, 0.3 ml, 0.7 ml, 1 ml, 1.3 ml, 1.7 ml or 2 ml.

In one embodiment, based on a total weight of 10 g of the anti-insect culture medium, the anti-insect ingredient is in an amount of 1×10⁻⁵ g to 2 g, for example, 1×10⁻⁵ g, 5×10⁻⁵ g, 1×10⁻⁴ g, 5×10⁻⁴ g, 1×10⁻³ g, 5×10⁻³ g, 1×10⁻² g, 5×10⁻² g, 0.1 g, 0.5 g, 1 g, 1.5 g or 2 g.

In one embodiment, the shaped medium is shaped by compression.

According to the present invention, the shaped medium indicates that the relative position of the culture medium solids is fixed, and the shaped medium has a fixed shape.

In one embodiment, the shaped medium has a shape corresponding to a cultivation container. Preferably, the shape of the shaped medium is customizable. In other words, the shaped medium can have various shapes.

In one embodiment, the shaped medium has a top surface, and the shaped medium has an accommodation space in the center, and the accommodation space connects the top surface of the shaped medium through a communication channel.

The top surface of the shaped medium indicates an outer surface of the shaped medium, wherein the outer surface is disposed on the side away from the direction of gravity during the cultivation process.

Preferably, the top surface of the shaped medium is C-shaped. More preferably, the horizontal cross-section of the shaped medium is C-shaped. That is, the side wall of the shaped medium is not a continuous wall and has a gap, so that a plant can be placed into the accommodation space of the shaped medium through the gap. Further, the C-shaped horizontal cross-section of the shaped medium indicates a cross-section vertical to direction of gravity during the cultivation process.

In one embodiment, the accommodation space has a diameter, and the communication channel has a diameter. Preferably, the diameter of the accommodation space is longer than that of the communication channel. More preferably, the diameter is an average diameter or a maximum diameter. According to the present invention, the accommodation space provides a space reserved for root growth, and the communication channel provides a space reserved for stem growth or allows a root of the plant seedling to directly enter the shaping medium.

In one embodiment, the shaped medium further comprises a glue and/or an adhesive.

Preferably, the shaped medium comprises a plurality of culture medium solids, and the glue fixes the relative position of the culture medium solids to maintain the structure of the shaped medium.

Preferably, the anti-insect particles are fixed to the shaped medium through the adhesive. For example, the anti-insect particles are fixed to the accommodation space, the communication channel or the top surface of the shaped medium, etc. through the adhesive.

More preferably, the anti-insect particles are fixed to the pores respectively through the adhesive. That is, the anti-insect particles are fixed to the walls of the pores, namely, to the outer surface of the culture medium solids surrounding the pores.

In one embodiment, the glue and/ or the adhesive has an ingredient comprising an organic matter. Preferably, the ingredient of the glue or the adhesive consists of an organic matter or organic matters.

In one embodiment, the anti-insect particles are caught, stuck or placed in the pores. In other words, the pores of the shaped medium can be adjusted to fix the anti-insect particles, thereby preventing the anti-insect particles from being brought to and accumulating in the bottom of the pot by water due to regular watering during the cultivation process. In addition, root growth will squeeze the pores to maintain the fixing effect for the anti-insect particles.

In one embodiment, the liquid formulation is mixed with the adhesive to form a mixture liquid, and the mixture liquid is dispersed and adhered to the walls of the pores and then solidified.

"Adhered to the walls of the pores" indicates adhering to the outer surface of the culture medium solids surrounding the pores.

In one embodiment, the culture medium solid has a material comprising any of coconut fibers, peat soils, sphagnum, barks, stones, charcoals, tree-ferns, foams, styrofoam fragments, Osmunda fibers, calcined clays and rock wools or a combination thereof, but not limited thereto.

In one embodiment, the sphagnum is also called Sphagnum moss.

In one embodiment, the coconut fibers are also called coconut coir.

Preferably, the culture medium solid has a material comprising coconut fibers and peat soils.

In one embodiment, the shaped medium comprises coconut fibers, peat soils and a glue.

In one embodiment, the moisture content of the shaped medium is that of the anti-insect culture medium.

In one embodiment, the shaped medium comprises an organic matter. Preferably, based on a total weight of the shaped medium, the shaped medium has an organic matter of 65 weight percent to 93 weight percent, for example, 65 weight percent, 67 weight percent, 69 weight percent, 71 weight percent, 73 weight percent, 75 weight percent, 78 weight percent, 81 weight percent, 84 weight percent, 87 weight percent, 90 weight percent or 93 weight percent. Preferably, the shaped medium has an organic matter of 88 weight percent to 92 weight percent.

In one embodiment, the shaped medium comprises a plug from Quick Plug B.V. in Netherlands. Preferably, the shaped medium comprises Xcellent Plug or a peat soils product which is officially registered in Taiwan with a registration number of "fertilizer importation (auxiliary) No. 0776065".

In one embodiment, the shaped medium per gram has a water absorption capacity of 2 g to 4 g. For example, the shaped medium per gram can absorb water in an amount of 2 g, 2.3 g, 2.6 g, 2.9 g, 3.2 g, 3.5 g, 3.8 g or 4 g.

In one embodiment, the water absorption capacity of the shaped medium per gram is that of the anti-insect culture medium per gram.

In one embodiment, the shaped medium comprises a dry material. Preferably, the dry material of the shaped medium has a bulk density of 130 kg/m³ to 140 kg/m³, for example, 130 kg/m³, 132 kg/m³, 134 kg/m³, 136 kg/m³, 138 kg/m³ or 140 kg/m³.

In one embodiment, the shaped medium has a shrinkage of 23% to 33%, for example, 23%, 25%, 27%, 29%, 31% or 33%.

In one embodiment, the shrinkage of the shaped medium is that of the anti-insect culture medium.

In one embodiment, the shaped medium has a porosity of 15% to 25%. In other words, based on a total volume of the shaped medium, the air content in the shaped medium is in a volume of 15 volume percent to 25 volume percent, for example, 15 volume percent, 17 volume percent, 19 volume percent, 21 volume percent, 23 volume percent or 25 volume percent.

In one embodiment, the porosity of the shaped medium is that of the anti-insect culture medium.

Preferably, when measuring any of the bulk density of the dry material of the shaped medium, the shrinkage of the shaped medium and the porosity of the shaped medium, the pressure head is -10 cm. The pressure head indicates the pressure potential energy per unit mass of water, expressed as the vertical height of a static column of water, which results from the pressure difference in the pressure field, and the reference pressure is the standard atmospheric pressure.

In one embodiment, the anti-insect ingredient comprises any of pyriproxyfen, permethrin, milbemectin, malathion, methomyl and imidacloprid or a combination thereof, but not limited thereto.

Preferably, the anti-insect ingredient comprises pyriproxyfen. Pyriproxyfen adopted by the present invention is advantageous for its low toxicity to mammals and is an environmentally friendly pesticide in agriculture.

The present invention further provides an anti-insect method, comprising planting a plant in the anti-insect culture medium.

Preferably, the plant is an orchid.

As orchid root health is particularly important for orchid growth, the present invention is particularly suitable for the cultivation of orchids, but not limited thereto.

To sum up, the present invention provides a complete anti-insect protection for roots throughout the plant seedling growth process, especially for orchid seedlings. Further, the present invention eliminates labor cost for regular re-application of anti-insect agents, and reduces the amount of anti-insect agents. Therefore, the present invention reduces plant cultivation cost and is more friendly to both the natural environment and the health of cultivators.

In the drawings:

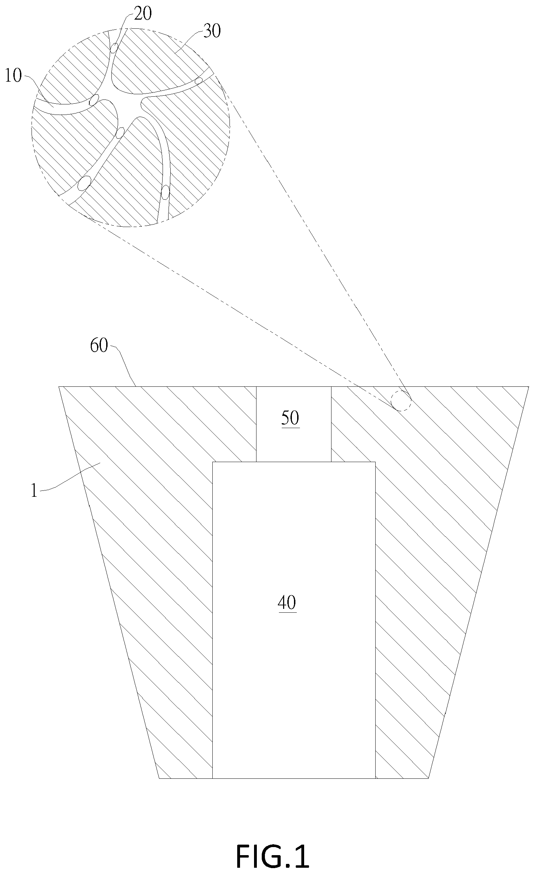

FIG. 1 is a vertical cross-sectional schematic diagram with a partial enlarged schematic diagram of the anti-insect culture medium of the present invention.

The present invention is further explained through the following embodiments. A person having ordinary skill in the art can easily understand the advantages and efficacies achieved by the present invention. The present invention should not be limited to the contents of the embodiments. A person having ordinary skill in the art can make some improvement or modifications without departing from the spirit and scope of the present invention to practice or apply the content of the present invention.

### Example 1: anti-insect culture medium

As shown in FIG. 1, the anti-insect culture medium of the present invention comprises a shaped medium 1 having a plurality of pores 10 interconnected to each other, and an anti-insect agent 20 evenly dispersed and fixed in the pores 10; wherein the shaped medium 1 comprises at least one culture medium solid 30, the anti-insect agent 20 comprises an anti-insect ingredient, and the anti-insect agent 20 is a sustained-release formulation.

Further, the anti-insect agent 20 is a plurality of anti-insect particles, and based on a total weight of the anti-insect culture medium, the shaped medium 1 is in an amount of 85 weight percent to 99.99 weight percent, and the anti-insect particles are in an amount of 0.01 weight percent to 15 weight percent.

Besides, the shaped medium 1 has an accommodation space 40 in the center, and the accommodation space 40 connects to the top surface 60 of the shaped medium 1 through a communication channel 50. The maximum diameter of the accommodation space 40 is greater than that of the communication channel 50. Finally, the top surface 60 of the shaped medium 1 is C-shaped, wherein the gap in the letter C results from a gap of the side wall of the shaped medium 1, so that a plant can be placed into the accommodation space 40 of the shaped medium 1 through the gap.

### Preparation 1: Example 2 (E2) to Example 4 (E4)

Preparation 1 comprised E2 to E4. Each of E2 to E4 adopted the same ingredients of the shaped medium, which was Xcellent Plug, a peat soils product which is officially registered in Taiwan with a registration number of "fertilizer importation (auxiliary) No. 0776065" and classified as "7-03-Organic culture medium" in Taiwan. Further, E2 to E4 adopted different anti-insect agents and are elaborated as follows.

Example 2 (E2): The culture medium solids (obtained from mincing said Xcellent Plug), an anti-insect agent (product name: Jin-LihNungLing, purchased from Lih Nung Chemical Co., Ltd., Taiwan, active ingredients: pyriproxyfen, specification:11% (w/v) water-based emulsion and sustained-release formulation) and an organic glue were mixed evenly for at least 5 minutes until an even mixture was observed by naked eyes. The even mixture was further compressed and shaped through a mold to obtain the anti-insect culture medium of E2. Finally, a single anti-insect culture medium of E2 had a total weight of about 10 g, and had about 0.5 ml of said Jin-LihNungLing. Therefore, the single anti-insect culture medium of E2 had 0.055 g (=0.5×11%(w/v)) of pyriproxyfen.

Example 3 (E3): The culture medium solids (obtained from mincing said Xcellent Plug), an anti-insect agent (product name: Sumilarv insect growth regulation granules, purchased from SUMITOMO CHEMICAL, Japan, active ingredients and amounts: pyriproxyfen 0.5 % (w/w), and specification: sustained-release formulation) and an organic glue were mixed evenly for at least 5 minutes until an even mixture was observed by naked eyes. The even mixture was further compressed and shaped through a mold to obtain the anti-insect culture medium of E3. Finally, a single anti-insect culture medium of E3 had a total weight of about 10 g, and had about 1 g anti-insect agent. Therefore, the single anti-insect culture medium of E3 had 0.005 g (=1×0.5/100) of pyriproxyfen.

Example 4 (E4): E4 was similar to E3, and the only difference was that the amount of the anti-insect agent in the single anti-insect culture medium of E4 was 0.06 g. Therefore, the single anti-insect culture medium of E4 had 0.0003 g (=0.06×0.5/100) of pyriproxyfen.

### Experiment 1: anti-insect experiment

Experiment 1 comprised five groups: Comparative example 1A, Comparative example 1B, Example 5, Example 6 and Example 7, wherein each group comprised 140 orchid seedlings. The ambient temperature was controlled at 28°C to 30°C with a humidity of 75% to 90%. Experiment 1 lasted for 10 weeks. The orchid seedlings of all groups were placed in the same space. Each group had two blocks, and each block had 7×10 orchid seedlings. As orchid seedlings were cultivated at a high density, each block was adjacent to each other, and each orchid seedling was so close to each other as the leaves thereof might contact each other.
I. The differences of all groups in Experiment 1 were elaborated as follows.

A. Comparative example 1A (CE1A) and Comparative example 1B (CE1B): Both CE1A and CE1B carried out the same traditional anti-insect method, and the only difference thereof was that CE1A and CE1B adopted different batches of orchid seedlings at a time interval of about 4 days.

The traditional anti-insect method was elaborated as follows: the anti-insect agent (said Jin-LihNungLing, 11% (w/v) water-based emulsion) was diluted 1500 times with water to obtain a diluted anti-insect agent. The diluted anti-insect agent was provided to the orchid seedlings regularly at an average interval of 2.5 days. The orchid seedlings were planted in a commercial shaped medium (said Xcellent Plug, no anti-insect agent was added) in a transparent plastic cup with holes at the bottom. The diluted anti-insect agent was poured into the transparent plastic cup until its waterline was higher than the top surface of the commercial shaped medium, which required about 50 ml. The diluted anti-insect agent not absorbed by the commercial shaped medium was gradually drained from the holes at the bottom of the transparent plastic cup.

A single commercial shaped medium was 10 g, and can absorb about 30 ml of the diluted anti-insect agent. Therefore, the shaped medium of both CE1A and CE1B absorbed about 0.0022 g (=30×11%×1/1500) of pyriproxyfen for each time, and the total absorption amount of pyriproxyfen during 10 weeks was 0.062 g (=0.0022×(7×10/2.5)).

B. Example 5 (E5) to Example 7 (E7): E5 to E7 carried out similar anti-insect methods, and the only difference thereof was that they adopted the anti-insect culture media obtained from E2 to E4 respectively and all of E2 to E4 comprised anti-insect agents.

The orchid seedlings in E5 to E7 were planted in the anti-insect culture media of E2 to E4 respectively in a transparent plastic cup with holes at the bottom. At an interval of 2 days or 3 days, water was poured into the transparent plastic cup until the waterline was higher than the top surface of the anti-insect culture medium, which required about 50 ml. The water not absorbed by the anti-insect culture medium was gradually drained from the holes at the bottom of the transparent plastic cup.

II. The anti-insect experiment result of Experiment 1 was evaluated as follows.

The growth of orchid seedlings in each group was examined at the 6^{th} and 10^{th} weeks to calculate the insect biting rate and the total defect rate, wherein the calculation methods thereof were elaborated as follows and the results were shown in Table 1.

### A. Insect Biting Rate

Calculation formula: Insect biting rate (%) = (numbers of orchid seedlings with insect infestation)/140×100%. During the 6^{th} and 10^{th} weeks, when insects or bite wounds were found on the orchid seedlings by naked eye, such orchid seedlings were marked as insect infestation positive and were included in the "numbers of orchid seedlings with insect infestation." Further, the "numbers of orchid seedlings with insect infestation" in the 6^{th} week were accumulated into that in the 10^{th} week.

### B. Total Defect Rate

Calculation formula: Total defect rate (%) = (numbers of defective products)/140×100%. The orchid seedlings with insect infestation and dead orchid seedlings were marked as defective products. For example, the orchid seedling dead due to poor quality of the orchid seedling per se or some unknown causes including insect bites, such as insect bites by newly hatched larvae or first-instar larvae which were too small to be found by naked eye, or the insect bites at sites which were unapparent or covered and thereby being difficult to identify. Finally, the "numbers of defective products" in the 6^{th} week were accumulated into that in the 10^{th} week.

**Table 1: The total amount of pyriproxyfen in ten weeks, the insect biting rate and the total defect rate of all groups**

| | Total amount of pyriproxyfen in ten weeks | 6^{th} week | | 10^{th} week | |
|---|---|---|---|---|---|
| | | insect biting rate | total defect rate | insect biting rate | total defect rate |
| CE1A | 0.062 g | 4.73% | 11.40% | 6.51% | 14.98% |
| CE1B | 0.062 g | 7.74% | 6.45% | 10.32% | 10.97% |
| E5 | 0.055 g | 2.14% | 2.14% | 3.570 | 3.57% |
| E6 | 0.005 g | 1.44% | 2.14% | 1.44% | 4% |
| E7 | 0.0003 g | 2.16% | 2.85% | 2.85% | 5% |

According to the comparison of CE1A, CE1B and E5, it could be found that although CE1A, CE1B and E5 all adopted Jin-LihNungLing (11% (w/v) water-based emulsion), the pyriproxyfen amount (0.055 g) in a single anti-insect culture medium of E2 adopted in E5 was slightly lower than that (0.062 g) adopted in CE1A and CE1B. As the insect biting rate and the total defect rate of CE1A and CE1B in the 6^{th} week and 10^{th} week were significantly higher than those of E5, one may find that the dispersing effect of pyriproxyfen inside the commercial shaped medium through the diluted anti-insect agent in CE1A and CE1B was unsatisfactory. Therefore, the present invention, wherein E5 adopted E2 (the shaped medium pre-mixed with the anti-insect agent), indeed effectively improved the anti-insect effect.

According to the comparison of E5 and E6, the pyriproxyfen amount (0.005 g) in a single anti-insect culture medium of E3 adopted in E6 was 9.09% (=0.005/0.055×100%) of that in a single anti-insect culture medium of E2 adopted in E5. That is, E6 adopted about one tenth of pyriproxyfen amount of that of E5. As both the insect biting rate and total defect rate of E5 and E6 were close in the 6^{th} and 10^{th} weeks, one may find that E6 adopted the anti-insect culture medium of E3, which was pre-mixed with Sumilarv Insect Growth Regulation Granules (the anti-insect particles), can significantly reduce the required amount of pyriproxyfen. Therefore, the anti-insect culture medium of E3 comprising the anti-insect particles (the anti-insect agent in a solid formulation) which was adopted in E6 reduced the risk of losing anti-insect particles resulting from regular watering, and demonstrated better fixation effect than the anti-insect culture medium of E2 comprising the anti-insect agent in a liquid formulation which was adopted in E5.

According to the comparison of E6 and E7, it could be found that the pyriproxyfen amount (0.0003 g) in a single anti-insect culture medium of E4 adopted in E7 was 6% (=0.0003/0.005×100%) of that in a single anti-insect culture medium of E3 adopted in E6. While both the insect biting rate and the total defect rate of E7 in the 6^{th} week and 10^{th} week were simply slightly higher than those of E6, one might find that the anti-insect culture medium comprising the anti-insect particles (the anti-insect agent in a solid formulation) further significantly reduces the required amount of pyriproxyfen.

Finally, the inventor provided an additional remark as follows: the inventor once conducted a comparison test to regularly provide said Jin-LihNungLing (11% (w/v) water-based emulsion) (abbreviated as liquid group) and Sumilarv Insect Growth Regulation Granules (the anti-insect particles) (abbreviated as solid group) to orchid seedlings with the same amount of pyriproxyfen respectively. The liquid group simply dispersed a diluted anti-insect agent of Jin-LihNungLing on the top surface of the commercial shaped medium, and the solid group simply dispersed the anti-insect particles on the top surface of the commercial shaped medium, wherein final amount of the pyriproxyfen in the diluted anti-insect agent dispersed in the commercial shaped medium in liquid group is the same as that of the anti-insect particles dispersed on the surface of the commercial shaped medium in the solid group. The inventor found that the anti-insect effect of the solid group was significantly poorer than that of the liquid group, and identified that the pyriproxyfen dispersing effect inside the commercial shaped medium through regularly watering in the solid group was unsatisfactory. Therefore, no comparative example, such as simply dispersing the anti-insect particles on the top surface of the commercial shaped medium, was carried out herein.

To sum up, the present invention (1) provides a long-term and complete anti-insect efficacy to plant roots; (2) requires less amount of an anti-insect agent; and (3) avoids the inconvenience of regular application of the anti-insect agent.

## Claims

1. An anti-insect culture medium, **characterized by** comprising:
a shaped medium (1) having a plurality of pores (10) interconnected to each other; and
an anti-insect agent (20) evenly dispersed and fixed in the pores (10); wherein
the shaped medium (1) comprises at least one culture medium solid (30);
the anti-insect agent (20) comprises an anti-insect ingredient; and
the anti-insect agent (20) is a sustained-release formulation.

2. The anti-insect culture medium as claimed in Claim 1, **characterized in that** based on a total weight of the anti-insect agent (20), the anti-insect ingredient is in an amount of 0.1 weight percent to 15 weight percent.

3. The anti-insect culture medium as claimed in Claim 1 or 2, **characterized in that** the anti-insect agent (20) is a plurality of anti-insect particles, and based on a total weight of the anti-insect culture medium, the shaped medium (1) is in an amount of 85 weight percent to 99.99 weight percent, and the anti-insect particles are in an amount of 0.01 weight percent to 15 weight percent.

4. The anti-insect culture medium as claimed in any one of Claims 1 to 3, **characterized in that** the anti-insect agent (20) is a water-based emulsion, and based on a total weight of 10 g of the anti-insect culture medium, the water-based emulsion is in a volume of 0.01 ml to 2 ml.

5. The anti-insect culture medium as claimed in any one of Claims 1 to 4, **characterized in that** based on a total weight of 10 g of the anti-insect culture medium, the anti-insect ingredient is in an amount of 1×10⁻⁵ g to 2 g.

6. The anti-insect culture medium as claimed in any one of Claims 1 to 5, **characterized in that** the shaped medium (1) has a top surface (60), and the shaped medium (1) has an accommodation space (40) in the center, and the accommodation space (40) connects the top surface (60) of the shaped medium (1) through a communication channel (50) .

7. The anti-insect culture medium as claimed in any one of Claims 1 to 6, **characterized in that** the culture medium solid (30) has a material comprising any of coconut fibers, peat soils, sphagnum, barks, stones, charcoals, tree-ferns, foams, styrofoam fragments, Osmunda fibers, calcined clays and rock wools or a combination thereof.

8. The anti-insect culture medium as claimed in any one of Claims 1 to 7, **characterized in that** the anti-insect ingredient comprises any of pyriproxyfen, permethrin, milbemectin, malathion, methomyl and imidacloprid or a combination thereof.

9. The anti-insect culture medium as claimed in any one of Claims 1 to 8, **characterized in that** based on a total weight of the shaped medium (1), the shaped medium (1) has an organic matter of 65 weight percent to 93 weight percent; the shaped medium (1) per gram has a water absorption capacity of 2 g to 4 g; the shaped medium (1) has a porosity of 15% to 25%; the shaped medium (1) has a dry material with a bulk density of 130 kg/m³ to 140 kg/m³; and the shaped medium (1) has a shrinkage of 23% to 33%.

10. An anti-insect method, **characterized by** comprising planting a plant in the anti-insect culture medium as claimed in any one of Claims 1 to 9.

11. The anti-insect method as claimed in Claim 9, **characterized in that** the plant is an orchid.
